# EUROPÄISCHE PATENTANMELDUNG

(11) **EP 4 717 521 A2**
(43) Veröffentlichungstag der Anmeldung: **01.04.2026**
(21) Anmeldenummer: 26158256.3
(22) Anmeldetag: 11.02.2021
(51) Int. Cl.: B60P 3/24

(54) **TRANSPORT VON UNTERSCHIEDLICHEN SCHÜTTGÜTERN**

(62) Teilanmeldung aus: 21704788.5
(71) Anmelder: FAMSA, 1869 Massongex (CH)
(72) Erfinder: Steiner, Urs, verstorben (CH)
(74) Vertreter: Keller Schneider Patent- und Markenanwälte AG

(57) **Zusammenfassung**

Eine Vorrichtung zum Transportieren von Schüttgüter und pumpfähigem Material, insbesondere ein Auflieger für ein Zugfahrzeug, umfasst ein erstes Behälterabteil und ein zweites Behälterabteil, wobei das erste Behälterabteil einen Fluidanschluss zum Entleeren des ersten Behälterabteils mittels einer Rohrleitung umfasst, und wobei das zweite Behälterabteil eine Entleeröffnung zum Entleeren von Schüttgütern aus dem zweiten Behälterabteil umfasst.

## Beschreibung

### Technisches Gebiet

Die Erfindung betrifft eine Vorrichtung zum Transportieren von Schüttgüter und pumpfähigem Material, insbesondere ein Auflieger für ein Zugfahrzeug, umfassend ein erstes Behälterabteil und ein zweites Behälterabteil.

### Stand der Technik

Schüttgüter wie Rüben, Kartoffeln, Abbruchmaterialien von Baustellen wie Strassenbelagsmaterial, Bauschutt, Kies, etc., aber auch pumpfähige Materialien wie Flüssigkeiten, Zement, Sand, Zucker, Chemikalien etc. werden heute typischerweise mit LKW's (Lastkraftwagen) oder mit der Bahn, insbesondere mit Güterwagen oder Kesselwagen von einem Ursprungsort zu einem Zielort gefahren. Insbesondere in diesen Bereichen des Transportwesens werden auch heute noch viele Leerfahrten gemacht. Nachdem die Ladung am Zielort abgeladen ist, fährt zum Beispiel der LKW mit leerem Transportbehälter zurück, um am Ursprungsort neu beladen zu werden. Solche Leerfahrten sind teuer und grundsätzlich zu vermeiden, da damit der LKW während der halben Betriebszeit keinen Nutzen bringt.

### Darstellung der Erfindung

Aufgabe der Erfindung ist es, eine dem eingangs genannten technischen Gebiet zugehörende Vorrichtung zu schaffen, mit welcher im Güterverkehr eine Anzahl Leerfahrten reduziert werden kann.

Die Lösung der Aufgabe ist durch die Merkmale des Anspruchs 1 definiert. Gemäss der Erfindung umfasst das erste Behälterabteil einen Fluidanschluss zum Entleeren des ersten Behälterabteils mittels einer Rohrleitung, und das zweite Behälterabteil umfasst eine Entleeröffnung zum Entleeren von Schüttgütern aus dem zweiten Behälterabteil.

Dadurch, dass die Vorrichtung ein erstes Behälterabteil für pumpfähige Materialien und für Schüttgüter und ein zweites Behälterabteil umfasst, können mit der Vorrichtung sowohl Schüttgüter als auch pumpfähige Materialien transportiert werden.

In der Praxis werden typischerweise zum Beispiel Baustellen sowohl mit Rohmaterial für den Bau beliefert als auch Abbruchmaterial abtransportiert. Mit der erfindungsgemässen Vorrichtung kann nun auf einer Hinfahrt zum Beispiel in dem ersten Behälterabteil Zement auf eine Baustelle geführt werden, um von dort im zweiten Behälterabteil Abbruchmaterial weg zu führen. Bei einer Ausbildung der Vorrichtung als Auflieger für einen LKW kann damit die Auslastung verdoppelt werden, d.h. während bisher zwei LKW's für diesen Einsatz jeweils ein Hin- und eine Rückfahrt ausführten, kann dieselbe Leistung nun mit der erfindungsgemässen Vorrichtung mit einem LKW in einer Hin- und Rückfahrt ausgeführt werden.

In einem weiteren Beispiel können mit der Vorrichtung im zweiten Behälterabteil Zuckerrüben zu einer Raffinerie geliefert und von dort raffinierter Zucker im ersten Behälterabteil weg transportiert werden. Dem Fachmann sind weitere Anwendungsmöglichkeiten bekannt.

Ein besonderer Vorteil liegt darin, dass mit der erfindungsgemässen Vorrichtung bei einem LKW mit einer begrenzten Ladekapazität, zum Beispiel einem LKW mit einer Lastbegrenzung von 40 Tonnen auf 5 Achsen, die beiden Behälterabteile derart dimensioniert werden können, dass das erste Behälterabteil respektive das zweite Behälterabteil alleine möglichst mit bis zum Gesamtgewicht von 40 Tonnen beladen werden können. Damit wird eine besonders hohe Auslastung des LKW's erreicht. In Varianten können das erste Behälterabteil respektive das zweite Behälterabteil auch eine geringere Kapazität aufweisen, womit die Behälterabteile mit geringerer Grösse ausgebildet sein können.

Unter dem Begriff "Schüttgüter" werden insbesondere auch Materialien verstanden, welche nicht pumpbar ist. Die Schüttgüter können zum Beispiel Abbruchmaterial von Baustellen wie zum Beispiel Strassenbeläge, insbesondere zum Beispiel Asphaltbeläge oder Betonbeläge, Bauschutt, grobes Gestein umfassen. Weiter können die Schüttgüter auch unverarbeitete Erntegüter aus der Landwirtschaft umfassen, wie zum Beispiel Zuckerrüben, Kartoffeln und dergleichen. Weiter können die Schüttgüter auch kommunale oder Industrielle Abfälle umfassen, wie zum Beispiel Altglas, Karton, Altmetall etc. Selbstverständlich können auch pumpbare Materialien im zweiten Behälterabteil transportiert werden.

Unter dem Begriff "pumpfähiges Material" werden alle Materialien verstanden, welche pumpfähig und damit über Rohrleitungen transportiert werden können. Insbesondere fallen darunter zum Beispiel Zement, Pellets (z.B. Holzpellets für Heizungen), gemahlene oder feinkörnige Lebensmittel wie Zucker, Mehl etc., feinkörnige oder pulverförmige Chemikalien wie Rohmaterialien für die chemische Industrie oder agronomische Produkte wie Dünger oder ähnliches, feinkörniger Kunststoff, flüssige Lebensmittel wie zum Beispiel Milch, Sirup, Öle, Wein, flüssige Chemikalien wie Alkohol, Öle, Säuren etc. Dem Fachmann sind weitere Materialien bekannt, welche pumpfähig sind und damit unter diese Kategorie fallen.

Die Vorrichtung umfasst ein erstes Behälterabteil und ein zweites Behälterabteil. Das erste Behälterabteil ist vorzugsweise direkt oder indirekt mit dem zweiten Behälterabteil verbunden. Die Verbindung kann zum Beispiel einen gemeinsamen Tragrahmen umfassen.

Das erste Behälterabteil umfasst einen Fluidanschluss zum Entleeren des ersten Behälterabteils mittels einer Rohrleitung. Damit ist das erste Behälterabteil geeignet zum Beladen mit einem pumpfähigen Material. Das erste Behälterabteil kann dazu eine obere erste Einfüllöffnung umfassen, über welche das pumpfähige Material in das erste Behälterabteil eingefüllt wird. Zum Entleeren umfasst das erste Behälterabteil einen Fluidanschluss, an welche zum Beispiel direkt eine Rohrleitung angeschlossen werden kann. Alternativ dazu kann der Fluidanschluss auch lediglich eine verschliessbare Öffnung umfassen, womit das pumpfähige Material durch die Schwerkraft über den Fluidanschluss abgelassen wird.

Vorzugsweise umfasst der Fluidanschluss einen Rohrstutzen, an welchen eine Rohrleitung lösbar befestigbar ist. Dazu kann der Fluidanschluss dahingehend ausgebildet sein, dass eine Rohrleitung zum Beispiel über einen Bajonettverschluss, eine Schraubverschluss oder dergleichen befestigt werden kann. Weiter kann eine Rohrleitung auch mittels einer Bride respektive Rohrschelle am Rohrstutzen befestigbar sein. Dem Fachmann sind weitere Befestigungsmethoden bekannt. In Varianten kann auf den Rohrstutzen auch verzichtet werden.

Vorzugsweise umfasst der Fluidanschluss weiter eine Schliesseinrichtung. Die Schliesseinrichtung kann zum Beispiel in einem Rohrstutzen einen Schieber, ein Ventil (z.B. ein Kugelventil) oder dergleichen umfassen. Damit kann verhindert werden, dass das pumpfähige Material beim Fluidanschluss bereits während einer Montage einer Rohrleitung austritt. In Varianten kann auf die Schliesseinrichtung auch verzichtet werden.

Das zweite Behälterabteil umfasst eine Entleeröffnung zum Entleeren von Schüttgütern aus dem zweiten Behälterabteil. Die Entleeröffnung ist damit geeignet, um nicht pumpfähiges Material abzulassen. Vorzugsweise umfasst das zweite Behälterabteil eine zweite Einfüllöffnung in einem vertikal oberen Bereich des zweiten Behälterabteils, womit ein Schüttgut in das zweite Behälterabteil eingefüllt werden kann. Die zweite Einfüllöffnung umfasst vorzugsweise ein Lichtmass, welches mindestens 50 %, vorzugsweise mindestens 70 % der Fläche einer maximalen Schnittebene des Innenraums des zweiten Behälterabteils ausmacht. Damit kann das Schüttgut besonders effizient in das zweite Behälterabteil eingetragen werden. In Varianten kann die Lichtöffnung auch kleiner als 50 % der maximalen Fläche einer Schnittebene des zweiten Behälterabteils sein.

Besonders bevorzugt umfasst das zweite Behälterabteil zwei, insbesondere gegenüberliegende, zweite Entleeröffnungen, womit das zweite Behälterabteil in effizienter Weise vollständiger entleert werden kann. In Varianten kann das zweite Behälterabteil auch genau eine oder mehr als zwei Entleeröffnungen umfassen.

Vorzugsweise umfasst die Entleeröffnung eine Klappe, welche zwischen einer Offenposition und einer Schliessposition verschwenkbar ist. In Varianten kann die Entleeröffnung auch einen Schieber umfassen, welcher zwischen einer Offenposition und einer Schliessposition verschiebbar ist.

Die Klappe ist vorzugsweise über ein Scharnier an einer Aussenseite des zweiten Behälterabteils angelenkt und bevorzugt hydraulisch öffen- und schliessbar. Damit wird ein besonders einfach aufgebauter Verschluss für die Entleeröffnung geschaffen, welche insbesondere mit geringem Gewicht ausgebildet sein kann. In Varianten kann die Entleeröffnung auch pneumatisch oder motorisch öffen- und schliessbar sein. Dem Fachmann sind dazu viele Varianten bekannt.

Vorzugsweise ist die Klappe vertikal über der Entleeröffnung an dem zweiten Behälterabteil angelenkt. Damit kann das zweite Behälterabteil besonders effizient entladen werden. In Varianten kann die Klappe auch anderweitig im Randbereich der Enleeröffnung angelenkt sein, zum Beispiel an einem vertikal unteren Rand oder seitlich zur Entleeröffnung.

Besonders bevorzugt umfasst die Vorrichtung eine äussere Klappe, welche in einem oberen Randbereich der zweiten Enleeröffnung angelenkt ist, und eine innere Klappe, welche an einem unteren Randbereich der Entleeröffnung angelenkt ist. Damit wird eine besonders sicher schliessende Klappe erreicht. Die innere Klappe kann zudem die Funktion einer Führung für das Schüttgut übernehmen. In Varianten kann auf die innere respektive die äussere Klappe auch verzichtet werden.

Bevorzugt ist die Vorrichtung als Anhänger mit mindestens einer Achse, für ein Zugfahrzeug, insbesondere als Sattelauflieger für eine Sattelzugmaschine ausgebildet. Vorzugsweise umfasst die Vorrichtung mindestens eine Achse und einen Kopplungsbereich zum Ankoppeln an ein Zugfahrzeug. Damit kann die Vorrichtung als Anhänger für ein Zugfahrzeug, insbesondere als Auflieger für ein Zugfahrzeug ausgebildet sein.

In Varianten kann die Vorrichtung auch als Güterwagen für den Schienenverkehr ausgebildet sein. In weiteren Varianten kann die Vorrichtung auch fest mit einem Zugfahrzeug verbunden sein, insbesondere kann die Vorrichtung als LKW ausgebildet sein, wobei die Behälterabteile auf der LKW-Brücke angeordnet sind. In der besonders bevorzugten Ausführungsform ist die Vorrichtung als Auflieger, insbesondere als Sattelauflieger für ein Zugfahrzeug ausgebildet.

Bevorzugt umfasst die Vorrichtung ein drittes Behälterabteil. Das dritte Behälterabteil kann als Behälterabteil für Schüttgüter oder als Behälterabteil für pumpfähiges Material ausgebildet sein. Damit umfasst die Vorrichtung drei Behälterabteile. Vorzugsweise ist dabei, sofern das dritte Behälterabteil für pumpfähiges Material ausgebildet ist, das zweite Behälterabteil zwischen dem ersten Behälterabteil und dem dritten Behälterabteil angeordnet. Analog ist vorzugsweise, sofern das dritte Behälterabteil für Schüttgüter ausgebildet ist, das erste Behälterabteil zwischen dem zweiten Behälterabteil und dem dritten Behälterabteil angeordnet. Insbesondere bei einer Anordnung der Behälter auf einem Auflieger für ein Zugfahrzeug kann damit eine optimale Lastenverteilung auf die Achsen des Aufliegers respektive des Zugfahrzeugs erreicht werden. Die Last eines vollständig beladenen mittleren Behälterabteils, während die äusseren Behälterabteile leer sind, wird damit auf die Achsen des Aufliegers als auch auf die Achsen des Zugfahrzeugs verteilt. Aber bei vollständig beladenen äusseren Behälterabteilen und leerem mittlerem Behälterabteil kann die Last der äusseren Behälterabteile einerseits auf die Achsen des Aufliegers und anderseits auf die Achsen des Zugfahrzeugs verteilt werden. Damit kann zum Beispiel eine maximale Zuladung von 24 Tonnen, je nach Art des Materials, vollständig in das mittlere Behälterabteil oder aber aufgeteilt zu je 15 Tonnen in die äusseren Behälterabteile verteilt werden, wobei in beiden Fällen die Achsen des Aufliegers und die Achsen des Zugfahrzeugs beladen sind. Damit wird wiederum erreicht, dass in beiden Fällen die Antriebsachsen des Zugfahrzeugs hinreichend belastet sind, womit wiederum in beiden Fällen eine gute Traktion erreicht werden kann.

In Varianten können auch mehr als drei Behälterabteile vorgesehen sein.

Bevorzugt ist ein Fassungsvolumen des zweiten Behälterabteils grösser, als ein Fassungsvolumen des ersten Behälterabteils respektive des dritten Behälterabteils. Dies ist insbesondere dann von Vorteil, wenn das erste und das zweite Behälterabteil beide für die Aufnahmen von pumpfähigem Material (oder beide für die Aufnahme von Schüttgüter) ausgebildet sind. Damit kann sowohl für den Transport von pumpfähigem Material als auch für den Transport von Schüttgüter eine optimale Auslastung erreicht werden.

In Varianten können die Behälterabteile auch alle dasselbe Fassungsvolumen aufweisen. Weiter kann das zweite Behälterabteil auch ein geringeres Fassungsvolumen als das erste respektive das zweite Behälterabteil aufweisen, insbesondere wenn zum Beispiel typischerweise das erste und das dritte Behälterabteil mit einem Material mit geringer Dichte beladen wird, während das zweite Behälterabteil mit einem Material mit hoher Dichte beladen wird.

Bevorzugt beträgt ein Fassungsvolumen des ersten Behälterabteils und des dritten Behälterabteils jeweils zwischen 5 und 20 m³, vorzugsweise zwischen 10 und 16 m³. Damit wird insbesondere bei einem Auflieger für einen 40 Tonner LKW ein ideales Ladevolumen erreicht, womit der LKW beim Transport von pumpfähigem Material ideal ausgelastet werden kann. Dem Fachmann ist aber klar, dass die Fassungsvolumen auch anderweitig ausgebildet sein können. Insbesondere in einer Anwendung als Güterwagen kann ein Volumen des ersten, des zweiten und/oder des dritten Behälterabteils auch grösser als 20 m³ sein.

Vorzugsweise beträgt ein Fassungsvolumen des zweiten Behälterabteils zwischen 10 und 30 m³, vorzugsweise zwischen 15 und 25 m³. Damit weist das zweite Behälterabteil vorzugsweise ein grösseres Fassungsvolumen als das erste respektive zweite Behälterabteil auf (siehe oben). Damit kann auch bei einem Transport eines Schüttguts (sofern das zweite Behälterabteil für den Transport von Schüttgut ausgebildet ist) optimal ausgelastet werden. Das Fassungsvolumen ist insbesondere bei einer Ausbildung der Vorrichtung als Auflieger für einen 40 Tonner LKW ideal. Dem Fachmann ist klar, dass das zweite Behälterabteil auch ein Fassungsvolumen von weniger als 10 m³ respektive mehr als 30 m³ aufweisen kann.

Bevorzugt ist der Anhänger als Mehrachsenanhänger, insbesondere als Dreiachsenanhänger ausgebildet. Damit kann die Vorrichtung als Sattelauflieger für ein 40 Tonner (ein LKW mit einem Gesamtgewicht von 40 Tonnen) ausgebildet sein. Das Zugfahrzeug kann dabei drei Achsen aufweisen, wobei der Auflieger mit zwei Achsen unterstützt ist. Somit wird die Vorrichtung im Betrieb als Auflieger vorzugsweise gesamthaft durch fünf Achsen getragen, womit die Gesamtlast auch die fünf Achsen verteilt werden kann. Dem Fachmann ist klar, dass diese Ausbildung lediglich als Beispiel zu verstehen ist. Die Vorrichtung kann auch als Anhänger mit lediglich zwei oder einer Achse ausgebildet sein. Weiter können auch mehr als drei Achsen vorgesehen sein.

Vorzugsweise umfasst das dritte Behälterabteil einen Fluidanschluss zum Entleeren des dritten Behälterabteils mittels einer Rohrleitung. Damit ist das dritte Behälterabteil vorzugsweise zur Aufnahme von pumpfähigem Material ausgebildet. Das zweite Behälterabteil ist vorzugsweise in der Mitte, zwischen dem ersten und dem dritten Behälterabteil angeordnet.

Vorzugsweise ist der Anhänger als Auflieger ausgebildet, wobei das erste Behälterabteil auf der mindestens einen Achse aufliegt und das dritte Behälterabteil auf einer Sattelplatte aufliegt, wobei die Sattelplatte zum Koppeln mit einer Sattelzugmaschine ausgebildet ist. Damit kann ein Teil der Last durch das Zugfahrzeug aufgenommen werden. In Varianten kann die Vorrichtung auch als Anhänger ausgebildet sein.

Insbesondere in der Ausbildung der Vorrichtung als Auflieger für ein Zugfahrzeug kann damit das erste Behälterabteil über den Achsen des Aufliegers oder als Überhang im Bereich der Achsen des Aufliegers angeordnet sein. Das dritte Behälterabteil ist damit vorzugsweise im Bereich einer Sattelplatte zum Aufliegen auf dem Zugfahrzeug und damit im Betrieb im Bereich der Achsen des Zugfahrzeugs angeordnet. Das zweite Behälterabteil ist schliesslich zwischen den Achsen und der Sattelplatte des Aufliegers angeordnet - das zweite Behälterabteil kann dazu auch teilweise auf der Sattelplatte und/oder auf den Achsen des Aufliegers aufliegen.

Bevorzugt ist das zweite Behälterabteil zwischen dem ersten Behälterabteil und dem dritten Behälterabteil angeordnet. Damit liegt das Behälterabteil mit der Entleeröffnung für Schüttgüter in der Mitte zwischen zwei Behälterabteilen für pumpfähiges Material. Diese Anordnung ist insbesondere in der Anwendung bei einem Auflieger von Vorteil, da damit die Entleeröffnung für das Schüttgut - welche typischerweise wesentlich mehr Platz beansprucht als ein Fluidanschluss - zwischen der Sattelplatte und den Achsen des Aufliegers angeordnet werden kann. In diesem Bereich hat es hinreichend Platz, um eine oder mehrere grossflächige Entleeröffnungen vorzusehen und ebenso um die Klappen zum Verschliessen einer Entleeröffnung anzubringen. In Varianten können auch zwei Behälterabteile mit den Fluidanschlüssen nebeneinander angeordnet sein.

Bevorzugt umfasst der Fluidanschluss des ersten Behälterabteils und/oder des dritten Behälterabteils eine Kopplungseinrichtung zum fluiddichten Ankoppeln einer Rohrleitung. Damit kann in besonders effizienter Weise pumpfähiges Material aus dem ersten und oder dritten Behälterabteil entleert werden. Insbesondere kann damit das Entleeren des ersten und/oder dritten Behälterabteils auch mit einer Pumpe oder dergleichen unterstützt respektive kontrolliert werden. In Varianten kann auf die Kopplungseinrichtung auch verzichtet werden, das pumpfähige Material kann auch direkt, zum Beispiel über einen Trichter oder dergleichen abgelassen werden.

Vorzugsweise umfasst die Vorrichtung einen Behälter, in welchem eine erste Trennwand und eine zweite Trennwand derart angeordnet sind, dass zwischen der ersten Trennwand und der zweiten Trennwand das zweite Behälterabteil angeordnet ist. Damit wird ein besonders einfacher Aufbau der Vorrichtung erreicht. In einer Variante mit lediglich zwei Behälterabteilen würde ein Behälter genau eine Trennwand umfassen, womit das erste Behälterabteil und das zweite Behälterabteil voneinander abgegrenzt werden.

In Varianten kann auf den Behälter auch verzichtet werden. Die Behälterabteile können auch als separate Einheiten ausgebildet sein.

Bevorzugt ist das zweite Behälterabteil über die Entleeröffnung selbstentladend und insbesondere seitlich am zweiten Behälterabteil angeordnet. Damit wird einerseits eine schnelle und einfache Entladung des zweiten Behälterabteils erreicht. Anderseits wird damit auch eine besonders leichte Konstruktion des zweiten Behälterabteils erreicht, womit wiederum eine grosse Zuladung ermöglicht wird.

In Varianten kann auf die Selbstentladung auch verzichtet werden. In diesem Fall kann die Vorrichtung Fördermittel umfassen oder die Entleeröffnung kann derart ausgebildet sein, dass das zweite Behälterabteil mittels Fördermittel entladen werden kann. Die Fördermittel können zum Beispiel Förderbänder, Förderschnecken oder dergleichen umfassen.

Bevorzugt weist ein Bodenbereich des zweiten Behälterabteils hin zur Entleeröffnung einen Neigungswinkel von mindestens 30°, vorzugsweise mindestens 45° auf. Damit wird ein effizientes Entladen ermöglicht. In Varianten kann der Neigungswinkel auch geringer als 30 ° sein, insbesondere wenn Hilfsmittel für die Entladung vorgesehen sind.

Vorzugsweise ist das zweite Behälterabteil mit einer Einrichtung zur effizienten Entladung ausgestattet, insbesondere mit bewegbaren Ketten, einem Vibrationssystem, einer Neigungsänderungseinrichtung für einen Behälterboden oder einer Beschichtung zum Vermindern einer Haftreibung zwischen dem Schüttgut und einer inneren Behälteroberfläche, insbesondere einer Polyurethanbeschichtung. In Varianten kann auf diese Mittel auch verzichtet werden.

Bevorzugt verjüngt sich das erste Behälterabteil und/oder das dritte Behälterabteil nach unten, hin zum Fluidanschluss des ersten Behälterabteils respektive zum Fluidanschluss des zweiten Behälterabteils. Damit wird wiederum eine effiziente und vollständige Entladung eines pumpfähigen Materials aus dem ersten und/oder dritten Behälterabteil ermöglicht. In Varianten kann auf die Verjüngung hin zum Fluidanschluss auch verzichtet werden.

Vorzugsweise sind das erste Behälterabteil und/oder das dritte Behälterabteil mit einer Einrichtung zur effizienten Austragung von pumpfähigem Material, insbesondere mit einer Einrichtung zur Luftdruckpulsation ausgestattet. Dem Fachmann sind auch weitere Techniken für eine effiziente Austragung von pumpfähigem Material bekannt. In Varianten kann auf diese Einrichtung auch verzichtet werden.

Im Verfahren zum Transport von Schüttgütern mit solchen Vorrichtung wird für einen Transport vorzugsweise entweder das erste Behälterabteil und das dritte Behälterabteil mit einem pumpfähigen Material beladen, während das zweite Behälterabteil leer bleibt; oder das zweite Behälterabteil wird mit einem Schüttgut beladen, während das erste Behälterabteil und das zweite Behälterabteil leer bleiben. Die Vorrichtung kann jedoch derart allgemein eingesetzt werden, dass sie auch in jedem der Behälterabteile eine Ladung aufweisen kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Seitenansicht einer Ausführungsform der Vorrichtung als Auflieger;
- Fig. 2: eine schematische Darstellung einer Draufsicht auf den Auflieger der Figur 1;
- Fig. 3: eine schematische Schnittdarstellung quer zu einer Längsrichtung des Aufliegers durch das zweite Behälterabteil des Aufliegers der Figur 1;
- Fig. 4: eine schematische Darstellung einer Hinteransicht des Aufliegers der Figur 1; und
- Fig. 5: eine schematische Darstellung einer Seitenansicht einer Ausführungsform der Vorrichtung als Auflieger in grösserem Detail bei geöffnetem zweiten Behälterabteil.

Grundsätzlich sind in den Figuren gleiche Teile mit gleichen Bezugszeichen versehen.

### Wege zur Ausführung der Erfindung

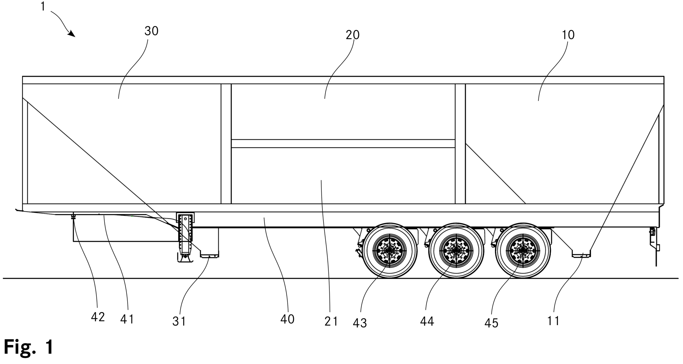

Die Figur 1 zeigt eine schematische Darstellung einer Seitenansicht einer Ausführungsform der Vorrichtung als Auflieger 1. Der Auflieger 1 umfasst einen Rahmen 40 mit einer Sattelplatte 41, welche vorliegend einen Königszapfen 42 umfasst, womit der Auflieger an einem Zugfahrzeug befestigt werden kann. Am Rahmen 40 sind weiter drei Radachsen 43, 44 und 45 angeordnet. Auf dem Rahmen ist ein Behälter angeordnet, welcher drei Behälterabteile umfasst.

Ein erstes Behälterabteil 10 ist bezüglich einer Hauptfahrtrichtung hinten, teilweise als Überhang über die hinterste Radachse 45 hinaus, auf dem Rahmen 40 befestigt. Das erste Behälterabteil 10 reicht bis ungefähr zur Mitte der zweiten Radachse 44. Damit liegt eine Last bei beladenem erstem Behälterabteil 10 vollständig auf den Achsen 43 - 45 des Aufliegers 1.

Das erste Behälterabteil 10 umfasst einen Fluidanschluss 11, welcher damit bezüglich der Hauptfahrtrichtung hinter der letzten Radachse 45, an einem vertikal unteren Ende des ersten Behälterabteils 10 angeordnet ist. Damit wird eine besonders ergonomische Bedienung erreicht, womit das erste Behälterabteil 10 über einen grossen Umfangsbereich für die Entladung gut zugänglich ist. Im ersten Behälterabteil 10 können pumpfähige Materialien transportiert werden, wie zum Beispiel Zement, Reis, Flüssigkeiten etc. Das erste Behälterabteil 10 ist derart dimensioniert, dass die Seitenwände relativ steil hin zum Fluidanschluss 11 nach unten geneigt sind. Damit wird ein effizientes Austragen des pumpfähigen Materials unterstützt. Der Neigungswinkel beträgt vorliegend mindestens 125 °. Das erste Behälterabteil 10 weist vorliegend ein Fassungsvolumen von 14 m³ auf. Eine Länge des ersten Behälterabteils 10 in der Hauptfahrtrichtung beträgt 4 m.

Weiter umfasst der Auflieger 1 ein zweites Behälterabteil 20, welcher zur Aufnahme von Schüttgüter ausgebildet ist, das heisst zur Aufnahme von Gütern welche nicht pumpbar sind. Dem Fachmann ist jedoch klar, dass pumpbare Materialien ebenfalls im zweiten Behälterabteil 20 transportiert werden können. Im Unterschied zum ersten Behälterabteil 10 umfasst das zweite Behälterabteil 20 seitlich eine Klappe 21, über welche das Schüttgut aus dem zweiten Behälterabteil 20 entladen werden kann. Das zweite Behälterabteil 20 umfasst auf der gegenüberliegenden Seite eine zweite Klappe 21, so dass das Schüttgut beidseitig entladen werden kann. Das zweite Behälterabteil liegt bezüglich der Hauptfahrtrichtung hinter der Sattelplatte 41 und liegt über der ersten Radachse 43 und teilweise über der zweiten Radachse 44. Die Last des zweiten Behälterabteils 20 ist somit auf das Zugfahrzeug und die Radachsen 43 - 45 verteilt. Das zweite Behälterabteil weist ein Fassungsvermögen von 19 m³ eine Länge von 4.6 m auf.

Schliesslich umfasst der Auflieger 1 ein drittes Behälterabteil 30, welches wie das erste Behälterabteil 10 in einem vertikal unteren Bereich einen Fluidanschluss 31 umfasst. Das dritte Behälterabteil 30 ist somit wiederum zum Transport von pumpfähigen Materialien ausgebildet und ist bezüglich der Hauptfahrtrichtung vor dem zweiten Behälterabteil 20 auf dem Rahmen 40 angeordnet. Der Fluidanschluss 31 liegt zwischen der ersten Radachse 43 und der Sattelplatte 41, womit auch dieser Fluidanschluss 31 beidseitig des Aufliegers 1 gut zugänglich ist.

Das dritte Behälterabteil 30 ist derart dimensioniert, dass die Seitenwände relativ steil hin zum Fluidanschluss 31 nach unten geneigt sind. Damit wird ein effizientes Austragen des pumpfähigen Materials unterstützt. Der Neigungswinkel beträgt vorliegend mindestens 135 °. Das dritte Behälterabteil 30 weist vorliegend ein Fassungsvolumen von 14 m³ auf. Eine Länge des dritten Behälterabteils 30 in der Hauptfahrtrichtung beträgt 4 m.

Das zweite Behälterabteil 20 ist innerhalb des Behälters durch eine Trennwand von dem ersten Behälterabteil 10 und dem dritten Behälterabteil 30 abgetrennt. Damit wird eine besonders kompakte und zugleich materialsparende Bauweise erreicht.

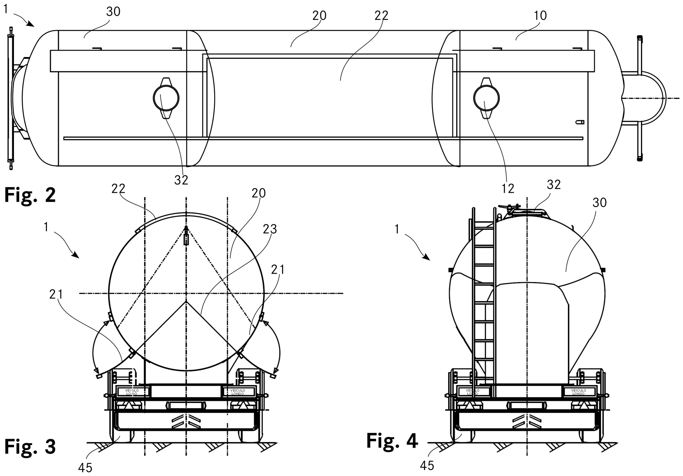

Die Figur 2 zeigt eine schematische Darstellung einer Draufsicht auf den Auflieger 1 der Figur 1. In dieser Darstellung sind beim ersten Behälterabteil 10 eine Luke 12 und beim dritten Behälterabteil 30 eine Luke 32 ersichtlich. Diese dienen zum Beladen des ersten Behälterabteils 10 respektive dritten Behälterabteils 30 mit einem pumpfähigen Material. Das zweite Behälterabteil 20 umfasst eine verschliessbare Einfüllöffnung 22, über welche das zweite Behälterabteil 20 beladen werden kann. Die Einfüllöffnung 22 ist grossflächig ausgebildet, so dass das zweite Behälterabteil 20 auch zum Beispiel mit einem Bagger oder einem Förderband effizient beladen werden kann. Die Einfüllöffnung 22 ragt im Wesentlichen über eine Gesamtlänge des zweiten Behälterabteils 20 bezogen auf die Hauptfahrtrichtung, somit vorliegend über rund 4 m. Die Breite der Einfüllöffnung rechtwinklig, zur Länge beträgt mehr als 50% der Gesamtbreite des Aufliegers 1 quer zur Hauptfahrtrichtung. Der Verschluss der Einfüllöffnung 22 erfolgt mit bekannten Techniken, insbesondere über ein Schiebewand oder eine Schwenkklappe oder dergleichen.

Die Figur 3 zeigt eine schematische Schnittdarstellung quer zu einer Längsrichtung des Aufliegers 1 durch das zweite Behälterabteil 20 des Aufliegers 1 der Figur 1. Hier ist ersichtlich, dass das zweite Behälterabteil 20 im Querschnitt die Form eines Kreissektors mit einem Innenwinkel von rund 270° aufweist. Damit umfasst das zweite Behälterabteil einen Giebel 23, welcher beidseitig mit einem Winkel von rund 45° abfällt. Damit wird erreicht, dass das Schüttgut über die Schwerkraft durch die seitlichen Klappen 21 ausgetragen werden kann.

Die Figur 4 zeigt eine schematische Darstellung einer Hinteransicht des Aufliegers 1 der Figur 1. Sowohl hinten als auch vorne umfasst der Auflieger 1 eine Leiter, über welche ein begehbares Gitter erreicht werden kann, um zu den Luken des ersten Behälterabteils 10 respektive des dritten Behälterabteils 30 zu gelangen. Dies kann notwendig sein, um zum Beispiel eine Rohrleitung oder eine Schlauchleitung in die Luke 12 respektive 32 zu führen, um die Behälterabteile mit dem pumpfähigen Material zu befüllen. Dazu umfasst der Auflieger aufklappbare Geländer (siehe unten).

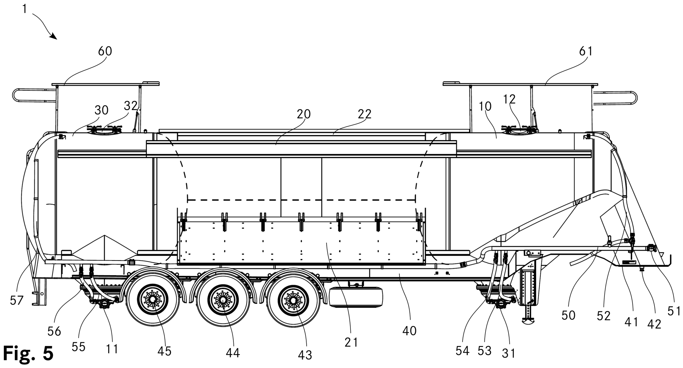

Die Figur 5 zeigt eine schematische Darstellung einer Seitenansicht einer Ausführungsform der Vorrichtung als Auflieger 1 in grösserem Detail bei geöffnetem zweiten Behälterabteil 20. Einerseits sind in dieser Abbildung die hochgeklappten Geländer 60 und 61 zur Sicherung der Begehung der Gitter des ersten Behälterabteils 10 respektive dritten Behälterabteils 30 ersichtlich.

Weiter zeigt die Figur 5 eine Drucklufthauptleitung 50, welche sich seitlich entlang der ganzen Längsrichtung des Aufliegers 1 in der Fahrtrichtung erstreckt. Die Drucklufthauptleitung 50 hat einen Anschluss 51, welcher mit einem Kompressor eines Zugfahrzeugs verbunden werden kann. Von der Drucklufthauptleitung 50 zweigt jeweils eine Leitung 52 respektive 57 in einen oberen Bereich des dritten Behälterabteils 30 respektive des ersten Behälterabteils 10 ab. Weitere je zwei Druckluftleitungen 53, 54 führen zum Fluidanschluss 31 respektive zwei Druckluftleitungen 55, 56 führen zum Fluidanschluss 11. Damit kann mit Unterstützung der Druckluft ein Entladevorgang beschleunigt werden.

Dem Fachmann ist klar, dass dasselbe Konzept auch bei LKW-Anhänger mit Deichsel, zum Beispiel über eine Kugelkopfkupplung oder dergleichen angewandt werden kann. Weiter kann das Konzept auch für Güterwagen im Schienenverkehr eingesetzt werden.

Zusammenfassend ist festzustellen, dass erfindungsgemäss eine Vorrichtung zum Transport von Schüttgüter und pumpfähigem Material geschaffen wird, womit Leerfahrten verringert und damit ein Transport sowohl ökologisch als auch ökonomisch effizienter gehalten werden kann.

## Patentansprüche

1. Vorrichtung zum Transportieren von Schüttgüter und pumpfähigem Material, insbesondere ein Auflieger für ein Zugfahrzeug, umfassend ein erstes Behälterabteil und ein zweites Behälterabteil, **dadurch gekennzeichnet, dass**
a. das erste Behälterabteil einen Fluidanschluss zum Entleeren des ersten Behälterabteils mittels einer Rohrleitung umfasst, und
b. das zweite Behälterabteil eine Entleeröffnung zum Entleeren von Schüttgütern aus dem zweiten Behälterabteil umfasst.

2. Vorrichtung nach Anspruch 1, **dadurch gekennzeichnet, dass** sie ein drittes Behälterabteil umfasst.

3. Vorrichtung nach Anspruch 2, **dadurch gekennzeichnet, dass** das dritte Behälterabteil einen Fluidanschluss zum Entleeren des dritten Behälterabteils mittels einer Rohrleitung umfasst.

4. Vorrichtung nach Anspruch 3, **dadurch gekennzeichnet, dass** der Fluidanschluss des ersten Behälterabteils und/oder des dritten Behälterabteils eine Kopplungseinrichtung zum fluiddichten Ankoppeln einer Rohrleitung umfasst.

5. Vorrichtung nach einem der Ansprüche 2 bis 4, **dadurch gekennzeichnet, dass** das zweite Behälterabteil zwischen dem ersten Behälterabteil und dem dritten Behälterabteil angeordnet ist.

6. Vorrichtung nach einem der Ansprüche 2 bis 5, **dadurch gekennzeichnet, dass** sie einen Behälter umfasst, in welchem eine erste Trennwand und eine zweite Trennwand derart angeordnet sind, dass zwischen der ersten Trennwand und der zweiten Trennwand das zweite Behälterabteil angeordnet ist.

7. Vorrichtung nach einem der Ansprüche 1 bis 6, **dadurch gekennzeichnet, dass** das zweite Behälterabteil über die Entleeröffnung selbstentladend ist und insbesondere seitlich am zweiten Behälterabteil angeordnet ist.

8. Vorrichtung nach einem der Ansprüche 1 bis 7, **dadurch gekennzeichnet, dass** ein Bodenbereich des zweiten Behälterabteils hin zur Entleeröffnung einen Neigungswinkel von mindestens 30°, vorzugsweise mindestens 45° aufweist.

9. Vorrichtung nach einem der Ansprüche 1 bis 8, **dadurch gekennzeichnet, dass** das zweite Behälterabteil mit einer Einrichtung zur effizienten Entladung ausgestattet ist, insbesondere mit bewegbaren Ketten, einem Vibrationssystem, einer Neigungsänderungseinrichtung für einen Behälterboden oder einer Beschichtung zum Vermindern einer Haftreibung zwischen dem Schüttgut und einer inneren Behälteroberfläche, insbesondere einer Polyurethanbeschichtung.

10. Vorrichtung nach einem der Ansprüche 2 bis 9, **dadurch gekennzeichnet, dass** sich das erste Behälterabteil und/oder das dritte Behälterabteil nach unten, hin zum Fluidanschluss des ersten Behälterabteils respektive zum Fluidanschluss des zweiten Behälterabteils, verjüngt.

11. Vorrichtung nach einem der Ansprüche 2 bis 10, **dadurch gekennzeichnet, dass** das erste Behälterabteil und/oder das dritte Behälterabteil mit einer Einrichtung zur effizienten Austragung von pumpfähigem Material, insbesondere mit einer Einrichtung zur Luftdruckpulsation ausgestattet sind.

12. Vorrichtung nach einem der Ansprüche 1 bis 11, **dadurch gekennzeichnet, dass** sie als Anhänger mit mindestens einer Achse, für ein Zugfahrzeug, insbesondere als Sattelauflieger für eine Sattelzugmaschine ausgebildet ist.

13. Vorrichtung nach Anspruch 12, **dadurch gekennzeichnet, dass** der Anhänger als Mehrachsenanhänger, insbesondere als Dreiachsenanhänger ausgebildet ist.

14. Vorrichtung nach Anspruch 12 oder 13, **dadurch gekennzeichnet, dass** der Anhänger als Auflieger ausgebildet ist und wobei das erste Behälterabteil auf der mindestens einen Achse aufliegt und das dritte Behälterabteil auf einer Sattelplatte aufliegt, wobei die Sattelplatte zum Koppeln mit einer Sattelzugmaschine ausgebildet ist.

15. Vorrichtung nach einem der Ansprüche 2 bis 14, **dadurch gekennzeichnet, dass** ein Fassungsvolumen des zweiten Behälterabteils grösser ist, als ein Fassungsvolumen des ersten Behälterabteils respektive des dritten Behälterabteils.

16. Vorrichtung nach einem der Ansprüche 2 bis 15, **dadurch gekennzeichnet, dass** ein Fassungsvolumen des ersten Behälterabteils und des dritten Behälterabteils jeweils zwischen 5 und 20 m³, vorzugsweise zwischen 10 und 16 m³ beträgt.

17. Vorrichtung nach einem der Ansprüche 1 bis 16, **dadurch gekennzeichnet, dass** ein Fassungsvolumen des zweiten Behälterabteils zwischen 10 und 30 m³, vorzugsweise zwischen 15 und 25 m³ beträgt.

18. Transportfahrzeug umfassend eine Vorrichtung nach einem der Ansprüche 1 bis 17.

19. Verfahren zum Transport von Schüttgütern mit einer Vorrichtung nach einem der Ansprüche 1 bis 18, **dadurch gekennzeichnet, dass** für einen Transport entweder:
a. das erste Behälterabteil und das dritte Behälterabteil mit einem pumpfähigen Material beladen werden, während das zweite Behälterabteil leer bleibt;
oder
b. das zweite Behälterabteil mit einem Schüttgut beladen wird, während das erste Behälterabteil und das zweite Behälterabteil leer bleiben.
